# EUROPÄISCHE PATENTSCHRIFT

(11) **EP 1 312 889 B1**
(45) Veröffentlichungstag und Bekanntmachung des Hinweises auf die Patenterteilung: **23.01.2008**
(21) Anmeldenummer: 02025142.7
(22) Anmeldetag: 09.11.2002
(51) Int. Cl.: G01B 7/30, G01D 5/20

(54) **Induktiver Winkelsensor, insbesondere für ein Kraftfahrzeug**
Inductive angle sensor in particular for a motor vehicle
Capteur d'angle inductif en particulier pour une voiture

(30) Priorität: 15.11.2001 DE 10156238
(43) Veröffentlichungstag der Anmeldung: 21.05.2003
(73) Patentinhaber: Hella KGaA Hueck & Co., 59552 Lippstadt (DE)
(72) Erfinder: Schmidt, Franz-Josef, 33154 Salzkotten (DE); Irle, Henning, 59557 Lippstadt (DE); Kost, Norbert, 59557 Erwitte (DE)

(56) Entgegenhaltungen:
- WO-A-99/61868
- DE-A- 19 941 464

## Beschreibung

Die Erfindung betrifft einen induktiven Winkelsensor, insbesondere für ein Kraftfahrzeug mit den im Oberbegriff des Anspruches 1 genannten Merkmalen.

Ein solcher induktiver Winkelsensor ist aus der deutschen Patentanmeldung DE 199 41 464 A1 bekannt. Der dort beschriebene Winkelsensor verwirklicht das Noniusprinzip und zeichnet sich daher durch eine sehr hohe Auflösung und Meßgenauigkeit aus. In dieser Anmeldung wird auch vorgeschlagen, dass die beiden Koppelelemente näherungsweise in einer Ebene angeordnet sind. Der Winkelsensor zeichnet sich daher durch einen kompakten Aufbau aus, benötigt aber zwei getrennt voneinander angeordnete Koppelelemente, die separat hergestellt und bei der Fertigung des Winkelsensors genau relativ zueinander justiert werden müssen.

Aus der internationalen Patentanmeldung WO 99/61868 A ist ebenfalls ein induktiver Winkelsensor bekannt. Der in dieser Druckschrift offenbarte Winkelsensor weist Koppelemente auf. Die Koppelelemente sind als Leiterschleifen ausgebildet, die teilweise eine periodische Geometrie besitzen. Insbesondere stimmt die Periodizität der Schleifenstruktur jeweils einer Empfangsspule nicht mit der Periodizität der Geometrie jeweils eines der Koppelelemente überein. Ferner wird stets mindestens ein Kondensator benötigt, der einem der Koppelelemente zugeordnet ist.

Es ist die Aufgabe der Erfindung einen induktiven Winkelsensor zu schaffen, der im Vergleich mit dem vorgenannten Winkelsensor noch einfacher aufgebaut und kostengünstiger zu fertigen ist..

Diese Aufgabe wird erfindungsgemäß dadurch gelöst, dass
- die beiden Koppelelemente elektrisch miteinander verbunden sind, und
- die beiden Koppelelemente zu einem einstückig ausgebildeten Rotor verbunden sind, und
- die durch die Leiterschleifen der Koppelelemente ausgebildeten Flächen in derselben Ebene angeordnet sind.

In der DE 199 41 464 A1 wurde bereits gezeigt, dass es möglich ist, zwei aus jeweils einem Koppelelement und einer Empfangsgeometrie bestehende Sensorstrukturen miteinander zu verschachteln. Bei der Verwendung zweier, elektrisch nicht miteinander verbundener Koppelelemente, erzeugt jedes der beiden Koppelelemente ein magnetisches Feld. Wirksam in den Empfangsspulen wird ein resultierendes Feld, dessen Feldverlauf der additiven Überlagerung der Einzelfelder entspricht (Superpositionsprinzip). Hierbei induziert aber jedes Koppelelement in der Empfangsspule mit der abweichenden Periodizität keinen winkelabhängigen, sondern nur einen konstanten Spannungsbeitrag. Hierdurch wurde es möglich trotz des sich überlagernden Aufbaus zwei unabhängig wirkende Sensorsysteme zu schaffen.

Die Erfindung beruht auf der Erkenntnis, dass sich der Feldverlauf zweier elektrischen verbundener Koppelelemente qualitativ genau dem überlagerten Feldverlauf der einzelnen Koppelelemente entspricht.

Hierdurch wird es möglich, die beiden Koppelelemente einteilig auszubilden, so dass eine Justierung der Koppelelemente relativ zueinander bei der Fertigung des induktiven Winkelsensors wegfällt.

Darüber hinaus ist es möglich, die durch die Leiterschleifen der so verbundenen Koppelelemente aufgespannten Flächen in derselben Ebene anzuordnen. Hierdurch wird sogar eine einstückige Ausführung des (nun für beide Empfangsspulen gemeinsamen) Koppelelements, vorzugsweise als besonders kostengünstiges Stanzteil möglich.

Die beispielhafte Ausgestaltung des erfindungsgemäßen induktiven Winkelsensor ist in der Zeichnung schematisch dargestellt.

Es zeigen
Figur 1 die als einstückiges Teil ausgebildeten Koppelelemente des Winkelsensors,
Figur 2 eine 90°-Empfangsgeometrie, die mit einem 120°-Rotor betrieben wird,
Figur 3 eine Empfangsspulenanordnung eines gattungsgemäßen Winkelsensors,
Figur 4 die Ausgestaltung zweier Koppelelemente bei einem Winkelsensor nach dem Stand der Technik.

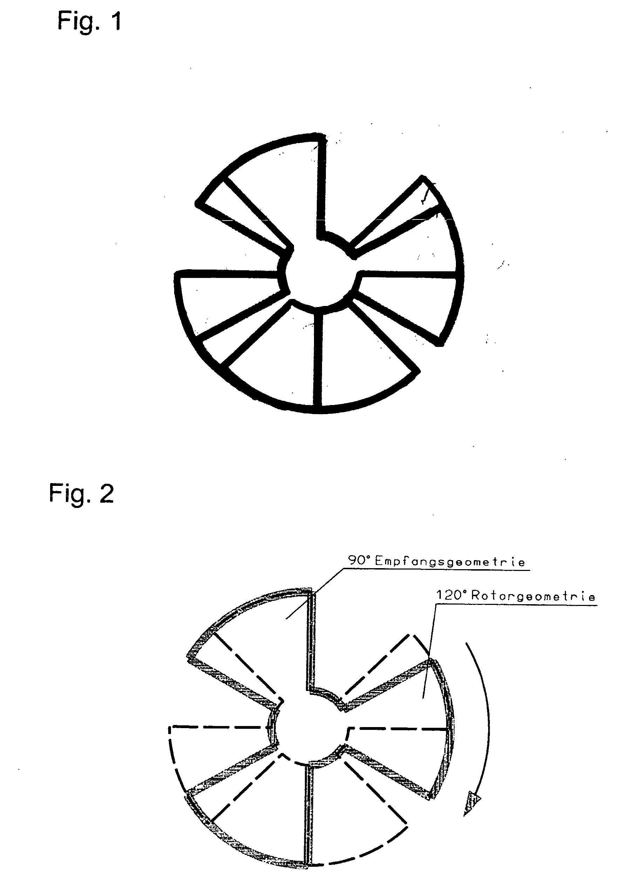

Die Figuren 2 bis 4 zeigen in schematischer Darstellung das aus der DE 199 41 464 A1 bekannte Funktionsprinzips eines Winkelsensors.

Anhand der Figur 2 wird eine 90°-Empfangsgeometrie betrachtet, die mit einem 120°-Rotor betrieben wird. Der Rotor ist das Koppelelement, welches die Signale der hier nicht dargestellten Sendespulen auf induktivem Wege in die Empfangsspulen einkoppelt. 120°-Rotor bedeutet, daß das Koppelelement eine 120°-Periodizität aufweist. Das vom Rotor in die Empfangsspule eingekoppelte Magnetfeld führt zu einer Signalspannungsamplitude an der Empfangsspule die proportional dem Ausdruck ∫ Bᵣ dA (Bᵣ: vom Rotor hervorgerufene Magnetfeldstärke in der Empfangsspule, A: Fläche der Empfangsspule) ist. Man kann zeigen, daß dieses Integral näherungsweise unabhängig von der relative Stellung des Rotors zum Stator ist. Anschaulich läßt sich dies dadurch verdeutlichen, daß die positiv zu zählenden Anteile des Integrals ebenso groß sind wie die negativ zu zählenden Anteile.

Eine vergleichbare Betrachtung für eine 120°-Empfangsgeometrie die mit einem 90°-Rotor betrieben wird, führt zu demselben Ergebnis. Da für die Überlagerung der Magnetfelder das Superpositionsprinzip angewendet werden kann, bedeutet dies, daß es möglich ist, mehrere Sensorstrukturen mit unterschiedlichen Winkeln ineinander zu verschachteln.

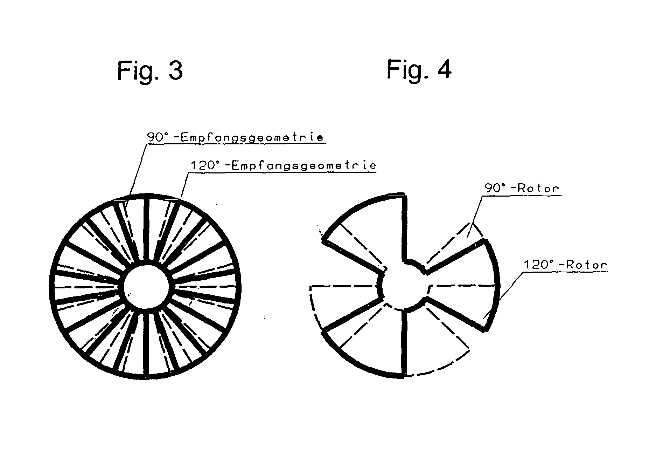

Ein Beispiel für eine solche Anordnung ist in den Figuren 3 und 4 dargestellt. Im Stator, dargestellt in der Figur 3, werden zwei Empfangsspulen mit unterschiedlichen Winkeln (hier 120° und 90°) realisiert. Der in der Figur 4 skizzierte Rotor wird aus zwei Einzelrotoren (in diesem Beispiel 120° und 90°) aufgebaut, die direkt übereinander liegen können. Da, wie oben ausgeführt, der 120°-Rotor die 90°-Empfangsgeometrie und der 90°-Rotor die 120°-Empfangsgeometrie nicht störend beeinflußt, erhalten wir an den Empfangsspulen zwei unabhängige Winkelinformationen.

Vorteilhaft ist es, daß der Winkelsensor so ausgeführt ist, daß über den Gesamtmeßbereich des Winkelsensors die Anzahlen der periodischen Wiederholungen in den Schleifenstrukturen der Empfangsspulen der beiden Empfangsgeometrien zueinander in einem nichtganzzahligen Verhältnis stehen, da hierdurch ein nach dem Noniusprinzip funktionierender Sensor realisiert werden kann.

Alternativ kann ein erfindungsgemäßer Winkelsensor aber auch mit einem ganzzahligen Periodizitätsverhältnis der Empfangsgeometrien, etwa mit versetzt zueinander angeordneten 30°-und 60°-Geometrien, aufgebaut werden.

Bei dem erfindungsgemäßen Winkelsensor wird die in der Figur 4 skizzierte Rotoranordnung nun wesentlich vereinfacht ausgeführt. Die beiden in der Figur 4 dargestellten Koppelelemente, die hier als 90°-Rotor und als 120°-Rotor bezeichnet sind, sind nun zu dem in der Figur 1 dargestellten einstückig ausgeführten Koppelelement elektrisch und mechanisch zusammengeführt worden. Dieses Koppelelement weist alle Konturen der Leiterschleifen der beiden in der Figur 4 dargestellten Rotoren auf, wobei die Konturen aber nicht mehr hintereinander sondern nun nebeneinander, also in der gleichen Ebene angeordnet sind. Der in der Figur 1 dargestellte Rotor kann als einfaches Stanzteil kostengünstig hergestellt werden.

## Patentansprüche

1. Induktiver Winkelsensor, insbesondere für ein Kraftfahrzeug,
- mit einer Oszillatorschaltung, die ein periodisches Wechselspannungssignal erzeugt und in eine Erregerspule einkoppelt,
- mit mehreren Empfangsspulen, die jeweils eine sich periodisch wiederholende Schleifenstruktur ausbilden und deren Anordnung jeweils eine Empfangsgeometrie ausbildet,
- mit einer Auswerteschaltung zur Auswertung der in den Empfangsspulen induzierten Signale,
- und mit beweglichen induktiven Koppelelementen, welche die Stärke der induktiven Kopplung zwischen Erregerspule und den Empfangsspulen beeinflussen,
- wobei der Winkelsensor zwei Empfangsgeometrien und zwei mechanisch miteinander verbundene Koppelelemente aufweist,
- wobei die Periodizität der Schleifenstrukturen der Empfangsspulen in den beiden Empfangsgeometrien verschieden ist,
- wobei die Koppelelemente jeweils als Leiterschleife mit einer periodischen Geometrie ausgebildet sind und die Periodizität der beiden Koppelelemente verschieden ist,
- wobei die Periodizität der Schleifenstruktur jeweils einer Empfangsspule mit der Periodizität der Geometrie jeweils eines Koppelelements übereinstimmt,
**dadurch gekennzeichnet, dass**
- die beiden Koppelelemente elektrisch miteinander verbunden sind, und
- die beiden Koppelelemente zu einem einstückig ausgebildeten Rotor verbunden sind, und
- die durch die Leiterschleifen der Koppelelemente ausgebildeten Flächen in derselben Ebene angeordnet sind.

2. Induktiver Winkelsensor nach Anspruch 1, **dadurch gekennzeichnet, dass** der Rotor als Stanzteil ausgebildet ist.

3. Induktiver Winkelsensor nach Anspruch 1, **dadurch gekennzeichnet, dass** die beiden Empfangsgeometrien in einer Ebene angeordnet sind.

4. induktiver Winkelsensor nach Anspruch 1, **dadurch gekennzeichnet, dass** über den Gesamtmeßbereich des Winkelsensors die Anzahlen der periodischen Wiederholungen in den Schleifenstrukturen der Empfangsspulen der beiden Empfangsgeometrien zueinander in einem nichtganzzahligen Verhältnis stehen.

## Claims

1. Inductive angle sensor, in particular for a motor vehicle,
- with an oscillator circuit which generates a periodic AC signal and couples into an exciter coil,
- with several receiver coils, each of which forms a periodically repeating loop structure, and the arrangement of which respectively forms a receiver geometry,
- with an evaluation circuit for the evaluation of the signals induced in the receiver coils,
- and with moving, inductive coupling elements which influence the strength of the inductive coupling between the exciter coil and the receiver coils,
- whereby the angle sensor has two receiver geometries and two mechanically linked coupling elements,
- whereby the periodicity of the loop structures of the receiver coils in the two receiver geometries is different,
- whereby the coupling elements are each designed as a conductor loop with periodic geometry, and the periodicity of the two coupling elements is different,
- whereby the periodicity of the loop structure of one of the receiver coils each correlates with the periodicity of the geometry of one of the coupling elements each, wherein
- the two coupling elements are electrically connected to one another, and
- the two coupling elements are connected into a single-piece formed rotor, and
- the areas formed by the conductor loops of the coupling elements are located in the same plane.

2. Inductive angle sensor according to claim 1, wherein the rotor is designed as a punched part.

3. Inductive angle sensor according to claim 1, wherein the two receiver geometries are located in one plane.

4. Inductive angle sensor according to claim 1, wherein the quantities of periodic repetitions in the loop structures of the receiver coils of the two receiver geometries are in a non-integer ratio to one another over the complete measuring range of the angle sensor.

## Revendications

1. Capteur d'angle inductif, en particulier pour un véhicule,
- avec un oscillateur qui génère un signal de tension alternative périodique et l'injecte dans une bobine d'excitation,
- avec plusieurs bobines d'excitation, qui forment chacune une structure en boucle se répétant périodiquement et dont la disposition forme à chaque fois une géométrie de réception,
- avec un circuit d'exploitation permettant d'exploiter les signaux induits dans les bobines réceptrices,
- et avec des éléments de couplage inductifs mobiles, qui influencent l'intensité du couplage inductif entre la bobine d'excitation et les bobines de réception,
- le capteur d'angle présentant deux géométries de réception et deux éléments de couplage liés mécaniquement l'un à l'autre,
- la périodicité des structures en boucle des bobines réceptrices étant différente dans les deux géométries de réception,
- les éléments de couplage étant chacun formés en tant que boucle conductrice avec une géométrie périodique et la périodicité des deux éléments de couplage étant différente,
- la périodicité de la structure en boucle d'une bobine réceptrice concordant avec la périodicité de la géométrie d'un élément de couplage,
**caractérisé en ce que**
- les deux éléments de couplage sont reliés électriquement l'un à l'autre, et
- les deux éléments de couplage sont reliés à un rotor conçu d'un seul tenant, et
- les surfaces formées par les boucles conductrices des éléments de couplage sont disposées dans le même plan.

2. Capteur d'angle inductif selon la revendication 1, **caractérisé en ce que** le rotor est conçu sous forme de pièce d'estampage.

3. Capteur d'angle inductif selon la revendication 1, **caractérisé en ce que** les deux géométries de réception sont disposées dans un même plan.

4. Capteur d'angle inductif selon la revendication 1, **caractérisé en ce que**, sur la plage de mesure complète du capteur d'angle, le rapport entre les nombres de répétitions périodiques dans les structures en boucle des bobines réceptrices des deux géométries de réception ne donne pas un nombre entier.
